Europäisches Patentamt

(19) European Patent Office

Office européen des brevets

(11) Publication number: **0 039 910**

**B1**

# (12) EUROPEAN PATENT SPECIFICATION

(45) Date of publication of patent specification: **22.04.87**

(51) Int. Cl.⁴: **B 29 B 15/00** // B29K7/00

(21) Application number: **81103474.3**

(22) Date of filing: **07.05.81**

(54) Process for extracting rubber and by-products from guayule and guayule-like shrubs.

(30) Priority: **14.05.80 US 149862**

(43) Date of publication of application:
**18.11.81 Bulletin 81/46**

(45) Publication of the grant of the patent:
**22.04.87 Bulletin 87/17**

(84) Designated Contracting States:
**AT BE DE FR GB IT LU SE**

(56) References cited:
**FR-A- 892 088**
**US-A-1 695 676**
**US-A-2 390 860**
**US-A-2 434 412**
**US-A-2 459 369**
**US-A-2 618 670**
**US-A-2 665 317**
**US-A-4 136 131**
**US-A-4 159 903**
**INDIA RUBBER WORLD, vol. 123, February
1951, New York, US. R. L. CHUBB:
"Deresination as a means of improving the
quality of guayule rubber", pages 557-562, 569**

(73) Proprietor: **THE FIRESTONE TIRE & RUBBER
COMPANY
1200 Firestone Parkway
Akron, Ohio 44317 (US)**

(72) Inventor: **Kay, Edward L., Dr.
79 S. Tamarack Road
Akron Ohio 44319 (US)**
Inventor: **Gutierrez, Richard, Mr.
13859 Bluffton N.W.
Canal Fulton Ohio 44614 (US)**

(74) Representative: **Kraus, Walter, Dr. et al
Patentanwälte Kraus, Weisert & Partner
Thomas-Wimmer-Ring 15
D-8000 München 22 (DE)**

Courier Press, Leamington Spa, England.

# 0 039 910

**Description**

This invention relates to a process of recovering usable products from guayule and guayule-like fibrous shrubs comprising the steps of:

(a) grinding the guayule shrub;

(b) extracting resins from the ground shrub; and

(c) extracting rubber from the ground shrub with hydrocarbon solvent, in which steps (b) and (c) are performed either sequentially or in reverse order.

The usual natural rubber of commerce is obtained by tapping the Hevea rubber tree (Hevea brasiliensis), collecting its latex, and coagulating the latex to obtain rubber. Neither Hevea nor any other rubber producing tree can be practically grown in the United States. Future green plant production of rubber and hydrocarbons in the United States will involve extraction processes more like those applicable to guayule (Parthenium argentatum) than those applicable to Hevea.

Guayule is one of many rubber producing plants. It has served as an important source of rubber in the past and interest in it has recently revived. The prehistoric native process for extracting rubber from guayule was to chew pieces of shrub, expectorate fibrous matter and retain gummy matter until a mass of resinous rubber accumulated in the mouth. Consolidation of many chewing-gum sized pieces provided enough material for rubber balls and other articles.

It is significant that the most modern process for extracting rubber from guayule is that, for example, practiced in a pilot plant at Saltillo, Coahaila, Mexico, and described in detail by the National Academy of Sciences 1977 booklet "Guayule: An Alternative Source of Natural Rubber".

Mastication of ground guayule shrub is effected by wet-milling with a rotating disc (pulping) mill to recover the resinous rubber in the form of "worms" which are separated from fibrous matter by flotation in water. Antecedent to wet-milling, lush guayule shrub is parboiled to coagulate the rubber latex and aid in removing leaves, then hammermilled to a size suitable for wet grinding in the pulping mill. Subsequent to the wet-milling and separation of bark and wood, the rubber is deresinated by acetone extraction and purified by dissolving in cyclohexane and filtering or centrifuging. These main processing steps and several auxiliary operations make up the current complicated separation process for winning rubber from guayule shrub. For the sake of clarity in presenting data, the preceding described process will be referred to as the "Saltillo" process.

The Saltillo process is essentially the same as that described in US—A—2,434,412. It is also similar to the process taught in US—A—2,459,369 except that deresination of the rubber results in a lower recovery of resin than in the patented process of deresinating the whole plant material; this patent does, however, indicate that it would be optional to process defoliated shrub. This statement should be considered in the light of the statement in US—A—4,159,903 (col. 4, lines 25—27) that the entire plant, except the leaves, must be processed to extract the rubber.

Processing of whole guayule shrub has definite economic and energy-conservation benefits. The processing costs and energy requirements for parboiling and defoliating of guayule shrub are eliminated.

Additional benefits of applicants' invention will be more apparent if one realizes that guayule shrub contains not only a valuable rubber component but also a resin fraction generally described as sugars and polysaccharides as well as a terpene and glyceride-ester fraction. Again, for the sake of clarity, the sugars and polysaccharide fraction will be referred to as the water-soluble fraction to distinguish from the resin fraction which will be defined based on solubility characteristics; that is, the resin fraction will be defined as that portion of guayule shrub which is soluble in a deresinating solvent such as acetone or other solvents herein disclosed as being equivalent to acetone.

A really efficient guayule processing procedure should recover all of the inherently valuable components of guayule shrub. Applicants will endeavor to specifically disclose the advantages of their invention over the prior art relative to recovery of all of the valuable components of guayule shrub in an economically and energy-efficient manner.

In general, we will refer to the Saltillo process as being the most technologically advanced process of the prior art. We will refer to the procedure of recovering guayule rubber by dispersing ground guayule shrub in water and allowing the rubber to float to the surface for subsequent recover as the water-flotation procedure.

We will broadly refer to the process of extracting rubber directly from the guayule shrub with a hydrocarbon as solvent extraction. The solvent extraction of rubber can be effected by either percolation or total immersion. By "percolation" we mean that solvent is passed through a fixed bed of shrub to effect extraction. By "immersion" we mean that the shrub is immersed in solvent contained in a suitable vessel and the shrub/solvent mixture can be agitated to effect extraction.

By "whole" guayule shrub we mean the complete shrub including the roots, base, stem, branches and leaves. Our intent is to also include "pollarded" guayule shrub in the above definition of "whole" guayule shrub.

"Pollarded" guayule shrub is defined as shrub which is harvested by cutting the shrub a few cm above ground level and harvesting the greater portion of the base, branches, stems and leaves. The root system is left in the soil to generate another "shrub". By defoliated guayule shrub applicants mean the whole guayule shrub (including pollarded shrub) which has been treated to remove all of the leaves.

2

**0 039 910**

All other abbreviations used in this specification refer to scientifically accepted notations.

Of necessity, we have had to demonstrate our processes using wild guayule shrub native to Texas. We believe that our disclosed processes would give essentially the same results with cultivated guayule shrubs of all varieties and of generally higher rubber content.

Those skilled in the art have long recognized that direct solvent extraction of rubber from guayule shrub seems to offer many advantages over water flotation. The primary advantage would be elimination of many processing steps including parboiling and/or pressure cooking; wet-milling; addition of acid, alkali, surfactants, etc.; flotation; water washing; and several drying and purification steps. Subsidiary advantages to be expected from solvent extraction in comparison to water flotation are large savings in process water (guayule grows and is processed in arid regions), possible improved resin yields and lower heavy-metal contamination of the rubber and the provisions for solution-phase purification as an integral component of the operation. However, solvent extraction of rubber from guayule, though often studied, has been found completely impractical on a scale, heretofore. In fact, the earliest industrial processes for guayule were based on solvent extraction but were found impractically difficult and expensive and were replaced by wet-milling techniques, see US—A—982,373. A solvent extraction is contemplated in US—A—1,695,676 wherein the cell walls of the guayule shrub are first broken down by penetrating the plant material with high pressure gas and suddenly releasing it to effect an instantaneous expansion. The advantages of this process are diminished by the expense of the requisite high pressure equipment and the inherent inefficiency of a batch-type procedure.

As is well known, the fundamental problem in solvent extraction of rubber from plant materials is that rubber is a high molecular weight polymer which is difficult to pass through cell walls and membranous tissue even when in solution. Thus, in order to accomplish solvent extraction of rubber, the plant structure has to be very thoroughly disrupted.

US—A—4,136,131, is directed to the extraction of rubber or rubber-like materials from fibrous plants, such as guayule, wherein said plants are subjected to simultaneous compression and high shear forces under nonaqueous conditions to result in (1) comminuted fibrous matter and (2) rubber-like substances which cohere into a plastic mass; this mass is shaped into particles; said rubber-like substances are then solvent extracted followed by recovering same from said solvent.

Additional prior art patents, background in nature, include US—A—1,753,185; 2,744,125; 2,666,317; 2,618,670; 2,572,046 and 2,549,763.

The most recent U.S. patent we are aware of is US—A—4,159,903; this patent is directed to the improved production of high molecular weight polyisoprene rubber by administering to plants, such as guayule an amine-type growth regulator. In column 4, lines 25—27 it is stated that the natural rubber latex in guayule is found in all parts of the plant but the leaves; it is then stated that the entire plant, except the leaves must be processed to extract the rubber.

According to the present invention, significant process improvements for achieving high yields of acceptable rubber and by-products such as the water-soluble and resin fractions and bagasse from guayule shrubs are obtained in a process as mentioned before which is characterized by extracting the resins from the ground shrub with concentrated resin miscella containing at least 4% resin as organic solvent. Processing costs and energy requirements are significantly reduced and the rubber recovered is in commercially acceptable form.

In the practice of the invnetion in its broadest concept the whole guayule shrub, including leaves can be conventionally ground, i.e., hammermilled and the ground material extracted with water and then resin miscella; or, resin miscella and then water, to recover essentially all of the resins. The rubber can be recovered by the water-flotation process or by solvent extraction. The bagasse can be recovered saturated with water from the water-flotation procedure, a physical state which will facilitate partial hydrolysis of the bagasse to give a product suitable for feeding animals. Alternatively, essentially complete hydrolysis of the bagasse can be effected to fermentable sugars which could be used as such or fermented to prepare ethanol.

The bagasse recovered from the solvent extraction process would be relatively free of water and could be used to advantage as a fuel to supply the power requirements of our process. One practical result of processing the whole shrub is that if a solvent-percolation-bed is used, the bed is diluted with leaves and the process is more efficient in that the rubber/shrub ratio is lowered which tends to increase percolation of rubber miscella through the bed.

Our unique process for guayule shrub includes processing of the whole shrub and recovering the rubber component of said shrub via a water-flotation procedure. The whole shrub is ground in a hammermill followed by extraction with resin miscella and then, optionally, with water; the resins are removed by extracting the ground shrub with resin miscella; water extraction then, in addition to removing water-solubles, saturates the leaves which will then sink to the bottom in the water-flotation step. If fresh ground whole shrub is charged to the water-flotation step, prior to resin miscella extraction, the leaves will tend to float to make recovery of rubber more difficult.

The non-defoliated Guayule shrub can also be processed in a non-aqueous system wherein resin miscella extraction of Guayule shrub is followed by volatization of adsorbed resin miscella and hexane rubber extraction; a stable rubber product is recovered if an effective stabilizer such as an amine-type stabilizer is used in conjunction with the hexane extraction step.

3

Our preferred solvent-extraction procedure for recovering rubber from Guayule shrub is one involving our counter-gravity extraction step.

Solvent extraction of rubber from guayule shrub by known methods of extraction has been found to be difficult. Extraction of the rubber can be done by percolation and total immersion. In percolation the viscosity of the rubber cement causes a slow percolation rate and extracting with a concentrated miscella becomes almost impossible. Lowering of the L/D (length/diameter) ratio of the column will aid percolation. In immersion, the rubber is extracted easily but filtering becomes a problem.

In the practice of our invention we have found it to be more efficient to deresinate the guayule shrub with concentrated resin miscella.

A practical embodiment that can be implemented in our general procedure is to reduce dirt contamination in guayule rubber obtained by solvent-extraction via percolation by recycling to the column until the desired levels of dirt are attained. The bed functions as an efficient filter.

In our extraction process for guayule shrub, several valuable by-products are recoverable. The bagasse, which is approximately 50% of the shrub, can be recovered and can be used as fuel to supply power for our process.

The resins which are extracted from the shrub are also recoverable and are a mixture of terpenes, terpenoids, parthenoids and glycerides of fatty acids. The resin component also contains a valuable hard wax similar to carnuba wax. The resin can be considered for use as an adhesive in plywood and as a component in varnishes; said resin can also be used as a tackifying resin in the manufacture of reinforced composite rubber articles such as tires and car radiator hose.

The term "rubber" is defined herein in its normal sense as the elastic naturally-occurring hydrocarbon polymer of isoprene having predominantly a cis-1,4 structure, such as that obtained from Hevea brasiliensis. "Rubber-like polymeric hydrocarbons" is used herein to refer to naturally occurring nonrubber hydrocarbon polymers such as gutta-percha and balata. These are also polymers of isoprene. "Polymeric hydrocarbon substances" is used herein generically to refer to both rubber- and rubber-like polymeric hydrocarbons.

Our invention can be practiced with a large number of plant species bearing rubber and rubber-like hydrocarbons including particularly guayule (Parthenium argentatum), Rabbit-Brush (Crysothamnus nauseousus), Rubbervine (Cryptostegia grandiflora), Milkweeds (Asclepias incarnata, sublata, syriaca, et al), Goldenrods (Solidago altissima, graminifolia, leavenworthii, rigida, et al), Sow thistles (Sonchus arvensis oleraceous, et al), Rosin Weeds (Silphium species), Mountain Mints (Pycnanthemum species), and Cacalia atriplicifolia. Thus, in general, plants which are known to produce rubber can be used in the invention such as the compositae, Euphorbiaceae, Labiatae, and Moraceae and it is possible that the invention will be found applicable to most of these species also; particularly if plant breeders succeed in current efforts to develop for some of these species new varieties high in hydrocarbon and rubber contents.

Grinding of guayule shrub can be achieved with any one of the known mill units; these include hammer mills, roll mills, stone mills, ball mills and pulp mills. We prefer a hammer mill with an air conveyor system.

In our process we recover the resins and the rubber in commercially acceptable high yields with solvent extraction. We also recover more bagasse when processing the whole shrub and achieve a reduction in processing energy requirements. It is preferred to process guayule shrub shortly after harvest.

It is understood that about 2% to 15% by weight of the leaves of guayule shrub represents a recoverable resin fraction depending on moisture content and season of harvest. We have found that it is more efficient to deresinate with concentrated resin miscella as herein exemplified.

It is to be understood that the term "resin miscella" is derived from the term "miscella" used in the soybean industry to describe the solvent extract of the soybean; in our case, the resin is the extract. The term "bagasse" describes the spent leaves and wood from our total extraction process; this is also known as spent pulp.

Although commercial grade hexane which is a mixture of isomers, is our preferred hydrocarbon solvent, other such solvents that can be utilized in place of hexane include propane, butanes, pentanes, heptanes, octanes and nonanes. Cycloaliphatics such as cyclopentane, cyclohexane and cycloheptane can also be utilized. Aromatics such as benzene, toluene and the xylenes. Mixtures of selected hydrocarbon solvents can also be utilized. Optimization can be achieved with a minimum of routine experimentation.

## EXAMPLES

The following examples are representative and all parts are by weight unless otherwise specified. These examples can be varied within the context of the prior art and our total specification disclosure; they serve to illustrate, not to limit, our claimed invention. Optimization can be realized by one skilled in the art with a minimum of routine experimentation; comparative Example 4 is a flow sheet of the known Saltillo process.

Wild guayule shrub harvested in Fort Stockton, Texas, area was usually air-dried to a moisture content of 5—25% prior to grinding in a Wiley mill or hammer mill.

The percolation extractor used in the majority of the herein disclosed work consisted of a 10 cm diameter 152 cm high glass column which was usually charged with 3 kg of ground shrub. The shrub was

4

supported by a steel plate having twenty-two 0.95 cm diameter holes to allow for miscella flow. A wire screen placed on the steel plate prevented passage of the ground shrub.

Usually 7 kg of solvent or miscella were charged to a 25 l reservoir. The solvent was pumped through a rotameter and then through a steam-heated water bath to control temperature. The solvent could be either recycled to the reservoir or charged to the column for percolation. A throttle valve was used to control flow rate. A sample port was provided for checking the flow rates as well as sampling the percolating resin miscella. Percolations were usually conducted at flooding conditions.

A Waring blender or a Bauer single disc mill was used to grind deresinated shrub to a fineness suitable for recovering rubber by water flotation.

Total immersion extractions were performed via immersing ground guayule shrub in the specified solvent contained in a suitable vessel and agitating with a suitable stirrer.

To demonstrate that the guayule rubber recovered by applicants' disclosed processes was commercially acceptable, the recovered guayule rubber was compounded in a standard test recipe which was (with all parts therein taken by weight):

### Standard Test Recipe

### Modified ASTM—1A Recipe

| Ingredient | Parts by Weight |
|---|---|
| Rubber | 100 |
| Stearic Acid | 2.0 |
| Zinc Oxide | 6.0 |
| Sulfur | 3.5 |
| MBT* | 1.0 |

*MBT is 2-mercaptobenzothiazole

The procedure to prove the quality of the experimental guayule rubber samples was to test the compounded stock in a Monsanto Rheometer and subsequently actually vulcanize the compounded stock and obtain stress/strain data on the experimental vulcanizates.

A Monsanto Rheometer is used in these literally standard tests, with specific conditions employed being: operation at 100 rpm; use of the mini-die attachment in the apparatus, and the effecting of a one degree arc at 140°C during the test procedure.

The reasons for the use of the rheometer test, as is well known, are plain and fundamentally sound. Rheometer data are based on torque measurements. The lowest torque value (ML) is an indication of the amount of energy just to mix the compound prior to the onset of vulcanization. The highest torque value (MH) is an indication of the state of cure after the vulcanization reaction has been effected. The torque values are expresed in "SI" units of Newton-meters (Nm).

Additional valuable and informative rheometer data are "Ts" values which is the time to scorch; that is, the time measured in minutes to achieve a two-torque unit rise and the "Tc" which is the time in minutes required to achieve a 90 percent cure state.

A "Cure Rate Index" (CRI) is also generated from the rheometer data. The "CRI" is defined as:

$$\frac{1}{(Tc-Ts)} \times 100$$

and is indicative as to how fast the vulcanization reaction takes place; e.g., the rate of reaction.

All of the rheometer data are summarized in Table I which follows. For purposes of comparison and to demonstrate that the experimental guayule rubber obtained by our processes have commercial value, rheometer data on commercial Hevea rubber (AMA—7) is also included in Table I.

Compounded in the aforementioned test recipe, applicants have also recorded in Table I a total of four sets of test data on the Hevea compound to indicate the precision of the rheometer data.

As stated previously, the compounded samples of experimental guayule rubber were vulcanized to further define their commercial utility. The vulcanized sample specimens were then tested by standard and well known procedures for their obtained values of: (1) 600% modulus; (2) tensile strength, and (3) percentage elongation. These "stress/strain" data are summarized in Table II. In accordance with our testing procedure, "stress/strain" data on commercial Hevea (AMA—7) are included in Table II for comparison purposes and to further demonstrate the potential commercial utility of the guayule rubber recovered by applicants' processes. Again, we have recorded in Table II, which follows, a total of four sets of test data on the Hevea compound to indicate the precision of the stress/strain data.

5

**0 039 910**

The modulii and tensile values recorded in Table II are expressed in the "SI" units of megapascals (i.e., "MPa"). Generally, to accommodate involved practicalities of testing precision, the MPa values should be reported to the nearest tenth value.

Example 1

Deresination with Concentrated Resin Miscella

To demonstrate this process, whole guayule shrub was ground in a hammermill without prior parboiling and defoliation. A 3.0 kg sample of the ground shrub was deresinated via percolation with resin miscella in the percolation extractor. Recoverly of guayule resin was essentially 100% in this experiment.

The deresinated shrub was stripped of resin miscella by slightly heating under vacuum and the dried shrub diluted with approximately 10 parts water per one part shrub prior to grinding in a single disc pulping mill.

The deresinated rubber along with the contaminant bagasse, cork and extraneous dirt were slurried in hexane to effect dissolution of the rubber and then filtered to remove hexane-insoluble material.

Sufficient N,N'-bis(1-ethyl-3-methylpenyl)-p-phenylenediamine, as stabilizer, was added to the filtered hexane solution of guayule rubber to give 1.0 phr (parts per hundred rubber) of the phenylenediamine. Hexane was then allowed to evaporate from the solution to recover the purified guayule rubber. Purified guayule rubber obtained by this proces contained an average of 6.5 ppm Cu, 3.5 ppm Mn and 128 ppm Fe.

Guayule rubber recovered by this process, a Wiley mill being used to obtain a nominal 3 mm particle size, was identified as "GR—4" and mixed in the standard test recipe described previously.

As shown by the data summarized in Table III, the rate of extraction is significantly increased if the resin concentration is of the order of 4% or higher. The ability to extract resin with miscella containing about 30% resin has very significant practical importance. The size of equipment to recover the resin from the miscella will be relatively small and the energy requirement to remove the solvent from the resin according significantly lower.

Sample of guayule rubber recovered from shrub which was deresinated with approximately 32% and 33% resin miscella were identified as "GR—4A" and "GR—4B", respectively.

The samples were test compounded per our herein described procedure to determine potential commercial use of the experimental guayule rubber.

TABLE I

Monsanto Rheometer Results

| Test Recipe Containing: | Ts | Tc | Torque ML | MH | CRI |
|---|---|---|---|---|---|
| Hevea | 4.5 | 27.7 | 6.7 | 23.3 | 4.3 |
| " | 4.5 | 27.0 | 6.5 | 22.3 | 4.4 |
| " | 4.2 | 28.0 | 7.1 | 23.2 | 4.2 |
| " | 4.2 | 25.5 | 7.0 | 23.2 | 4.7 |
| Experimental Guayule Rubber: GR—4A | 4.5 | 25.0 | 4.0 | 20.3 | 4.9 |
| GR—4B | 5.8 | 28.5 | 4.0 | 18.9 | 4.4 |

### TABLE II
### Stress/Strain Results
### Compounds Cured 20 Minutes At 140°C

| Test Recipe Containing: | 600% Modulus | | Tensile Strength | Elongation |
|---|---|---|---|---|
| | psi | MPa | MPa | % |
| Hevea | | 8.7 | 20.8 | 725 |
| " | | 8.7 | 21.0 | 725 |
| " | | 8.1 | 20.2 | 750 |
| " | | 7.9 | 19.6 | 725 |
| Experimental Guayule Rubber: | | | | |
| GR—4A | | 5.9 | 21.4 | 800 |
| GR—4B | | 4.4 | 19.1 | 825 |

As shown in Table I, the rheometer data on "GR—4A" and "4B" approximated the values obtained on the Hevea control more closely than the other guayule rubber samples.

Referring to Table II, the stocks containing "GR—4A" and "4—B" had slightly lower modulii values and higher elongation values than the Hevea vulcanizate. These data indicate the stocks were slightly under cured; the values could be adjusted by selecting the correct cure time.

### TABLE III
### EFFECT OF RESIN MISCELLA CONCENTRATION ON
### ACETONE DERESINATION EFFICIENCY, 50°C

Wt.% Resin Extracted and Miscella
Concentration (Solids) After

| 15 min | 30 min | 45 min |
|---|---|---|
| 65 (1.9) | 69 (2.0) | 73 (2.1) |
| 92 (4.2) | 93 (4.3) | 96 (4.4) |
| 95 (5.6) | 95 (5.6) | 95 (5.6) |
| 96 (7.6) | 99 (7.8) | 99 (7.8) |
| 95 (10.4) | 97 (10.6) | 97 (10.6) |
| 101 (32.4) | 101 (32.4) | 100 (32.3) |
| 100 (33.0) | 100 (32.8) | — |

### Example 2

This example sets forth several unique procedures for recovering rubber from deresinated whole or defoliated guayule shrub via percolation with hexane.

We have heretofore referred to the difficulty of extracting guayule rubber via conventional percolation with a hydrocarbon solvent. Upon further experimental investigation, we have determined that dilution of freshly ground guayule shrub with spent bagasse will effect an increase in percolation rate. We have further discovered that saturating guayule shrub with a nonsolvent for rubber such as acetone or water also significantly aids the hexane percolation rate. Because of economics, we prefer to saturate the bed with water rather than acetone.

We have also discovered after considerable experimental work that percolation with hexane counter to gravity is a very effective means of extracting guayule rubber.

Although we do not want to be limited by theoretical considerations, we believe that the enhanced rate of hexane percolation through a bagasse-diluted percolation bed or through a water-saturated bed is due to the avoidance of rubber concentration gradients caused by rapid extraction of rubber in an untreated

# 0 039 910

percolation bed. The presence of bagasse diluent allows for some mixing or solvent/miscella thus avoiding a very high concentration of rubber in hexane which because of its high viscosity will not flow rapidly. The presence of water slows the rate of dissolution of rubber and allows the miscella to percolate through the bed before a high concentration of rubber is obtained. Upon recycling of the miscella, essentially all of the rubber can be extracted; however, under these conditions a very viscous high-concentration of rubber is avoided.

Counter-gravity hexane percolation to extract rubber is believed to be an efficient process even with nontreated percolation beds because the flow of extracting miscella tends to prevent the bed from compacting. If the percolation bed becomes sufficiently compacted the rubber/hexane solution must diffuse through the bed resulting in a very slow percolation rate. In addition, the force of gravity tends to retain the relatively dense shrub in the percolated column.

The following specific data serves to illustrate the above concepts that we consider to produce unexpected results.

A. *Bagasse Diluted Percolation Bed*

We prepared a 1:1 by weight mixture of freshly ground, deresinated and dried guayule shrub with dried guayule bagasse. Bagasse is defined as shrub which has previously been exhaustingly deresinated and essentially all of the rsin and rubber removed therefrom. The fines were removed from the bagasse via screening prior to diluting the freshly deresinated, dried guayule shrub with the bagasse.

The mixture was charged to a percolation column as previously described and hexane charged per our previously described procedure. Percolation of hexane through the bagasse diluted bed was relatively rapid. Using the same bed height, we had previously observed that hexane would not percolate through the bed if non-diluted deresinated shrub was used. Actual observation in the latter experiment was that the hexane penetrated only about the first few cm of the bed over a period of several hours.

The hexane-solution of rubber recovered from the bagase-diluted bed was filtered and sufficient amount of a paraphenylenediamine added to give 2.0 phr of the stabilizer. The stabilized rubber/hexane solution was then stripped of hexane in hot water, the rubber recovered was identified as "GR—10A" and evaluated in the test compound previously described. As shown by the data in Tables I and II, the cure rate and state of cure compared favorably with the Hevea control indicating that this experimental guayule rubber would be a commercially acceptable rubber.

B. *Water-Saturated Percolated Bed*

To demonstrate this procedure, we deresinated 3.0 kg of freshly ground guayule shrub in the extractor previously described. After draining the resin miscella, hot water was charged to the column to remove a significant portion of the water-soluble fraction and then the column was allowed to drain. The shrub contained in the column at the time was considered water-saturated. Hexane was then percolated through the column and after several recycles, the rubber miscella was removed and filtered. Hexane percolation rate was significantly faster than the control which would not percolate (see Example 10A). The rubber was stabilized with 2.0 phr of phenylenediamine type stabilizer and the rubber recovered via steam-stripping of hexane. The recovered dried rubber was identified as "GR—10B" and as indicated by the data recorded in Tables I and II had commercially acceptable properties when vulcanized using the referred to test formulation.

C. *Counter-Gravity Hexane Percolation*

The apparatus we used to demonstrate counter-gravity hexane percolation to extract guayule rubber consisted of a glass column approximately 10 cm in diameter and one meter in height. A positive displacement pump was used to transfer hexane (and after counter-gravity percolation had been started) rubber/hexane miscella from a reservoir through a heat exchanger to heat the miscella to approximately 40°—50°C. The effluent from the heat exchanger then flowed to the bottom of the glass column charged with guayule shrub. Retaining screens were placed in the glass column to support the shrub bed as well as to prevent large shrub particles to flow from the top of the glass column.

The hexane/rubber miscella flowed from the top of the column and through a filter to remove fines. This in-line filter is considered optional and could be replaced with a centrifuge, or, not used at all. The miscella then flowed to the reservoir at which point the miscella could be recovered to isolate the contained rubber or optionally the miscella could be recycled to the bottom of the column.

Deresinated guayule shrub was mixed with 3 parts by weight of hexane/rubber miscella to 1 part by weight of shrub. The concentration of the hexane/rubber miscella was 9.19% rubber. We used the 9.19% rubber miscella to initiate the counter-gravity percolation to simulate relatively severe conditions of very high viscosity rubber miscella. Previously, we have demonstrated several times that initiating counter-gravity percolation with fresh hexane was a very effective procedure for extracting rubber.

The length/diameter ratio of the bed varied between 2.5 to 3.0. This ratio will vary during counter-gravity percolation because the flow of rubber miscella in a counter-gravity mode tends to expand the bed allowing for good percolation rates and extraction efficiencies.

Hexane/rubber miscella was then pumped counter-gravity through the shrub bed and percolation continued for 45 minutes. Samples of the recycling rubber miscella were taken at specified times to

8

determine the rate of rubber extraction. As shown by the data summarized in Table V under Run No. 1, extraction of rubber was rapid; about 90% of the rubber contained in the shrub was extracted after only 10 minutes.

The column was drained and fresh hexane charged to recover the occluded rubber miscella on the column. By this technique the rubber recovered was 94%.

To further demonstrate that concentrated rubber/hexane miscella is effected in extracting guayule rubber from deresinated shrub, we conducted a similar experiment using an initial hexane-miscella containing 9.73% rubber. The extraction efficiencies for this experiment are also recorded in Table V under the heading of "Run No. 2".

Referring to Table V, Run No. 2; the rubber extraction efficiency after only ten minutes was 92%. After 10 minutes percolation, the rubber extraction efficiency was 93% indicative that the extraction of rubber is rapid and essentially complete after a short percolation time of about ten minutes.

The attainment of the high rubber extraction efficiencies summarized in Table V was unexpected based on prior art teachings. Prior art teaches that guayule shrub must be very finely ground or flacked to rupture all of the rubber cells in order to obtain high rubber extraction efficiencies. In the water-flotation process, the fine grinding is effected in a disc pulping mill. U.S. Patent No. 4,136,131 teaches that guayule plants should be subjected to simultaneous compression and high shear forces under nonaqueous conditions prior to solvent extraction. Since conditions of high shear forces are known to reduce the molecular weight of natural rubber (both Hevea and guayule) we contend that our process is superior to these prior art teachings.

## TABLE V
### Counter-Gravity Hexane Percolation Extraction Efficiencies

| Percolation Time, Minutes | % Rubber In Miscella | % Rubber Extracted |
|---|---|---|
| Run No. 1 | | |
| 0 | 9.19 | — |
| 10 | 9.28 | 90 |
| 20 | 9.41 | 91 |
| 30 | 9.48 | 92 |
| 45 | 9.52 | 92 |
| Run No. 2 | | |
| 0 | 9.73 | — |
| 10 | 9.89 | 92 |
| 20 | 9.80 | 92 |
| 30 | 9.95 | 93 |
| 45 | 9.97 | 93 |
| 60 | 9.97 | 93 |

Again to demonstrate utility we recovered guayule rubber from whole shrub via counter-gravity hexane percolation. This sample was identified as "GR—10—C". Essentially the same procedure was used to recover rubber from defoliated shrub. This rubber sample was identified as "GR—10—C—1". Both experimental rubbers were mixed in the standard test recipe and tested.

The rheometer data in Table I indicates that samples "GR—10—C" and "GR—10—C—1" were similar to the other guayule rubbers and compared favorably with the Hevea control. Unfortunately the stress/strain data in Table II indicates that the vulcanizates containing "GR—10—C" and "GR—10—C—1" were over cured. A 600% modulus value could not be obtained because the test specimen broke at about a 500% elongation. We are confident that modification of the vulcanization time would result in properties similar to the other guayule samples and comparable to the Hevea control.

# 0 039 910

Example 3

*Counter-Gravity Hexane Percolation of Water-Saturated Shrub*

This example demonstrates that our disclosed procedures to enhance the rate of hexane-percolation of guayule shrub to extract rubber can be combined to advantage. We constructed and assembled a series of three columns which were charged with water-saturated deresinated guayule shrubs. The columns were interconnected in a manner which compelled the effluent from the top of the first column to pass through the second column from the bottom to the top (counter-gravity) and the effluent from the second column to pass to the third column in a similar counter-gravity flow.

The columns were arranged in such a manner that the first column was approximately 25 cm higher than the second column which in turn was approximately 25 cm higher than the third column. This arrangement ensured that a small positive hydraulic pressure of hexane was applied to the bottom inlet of each column. In addition, hexane was charged from a reservoir the level of which was also approximately 25 cm higher than the top of the first column which ensured a small hydraulic pressure of hexane on all three columns. We determined experimentally that the passage of hexane through the complete system was so rapid that it was difficult to add sufficient hexane to maintain a continuous flow. Under essentially the same experimental conditions using dried deresinated shrub, both the percolation of hexane and rate of rubber extraction was rapid. However, the rate of hexane percolation with the water-saturated shrub was significantly faster.

In addition to disclosing that our disclosed procedure enhances hexane percolation to extract rubber from guayule shrub, this exmaple also demonstrates that the disclosed advantages can be realized with varying degrees of water-saturated guayule shrub, that is, hexane percolation of guayule shrub of various moisture content can be effective.

The procedures set forth in our examples 1 through 3 can be utilized to process, for example, whole guayule shrub or guayule shrub that has been defoliated.

Example 4

## Schematic Diagram of Saltillo Process

Fresh Shrub
↓
Parboiler ──────→ Leaves
↓
Hammermill

Aqueous
Caustic ────────→
Soda
↓
Bauer Mill
↓
Flotation Vat ─────┐
↓                  ├──→ Wood, Pulp and Cork
Flotation Vat ─────┘
↓
Washer
↓
Surfactant ──────→
↓
Acetone ──────→ Deresinator ──────→ { Resins
↓                                     { Cork and Debris
Antioxidant
Hexane ──────→ Solution Phase ──→ Dryer
Purification            ↓
Rubber

The Saltillo process for recovering rubber from guayule shrub, as heretofore described, is one wherein the entire shrub is initially parboiled to remove leaves. In our process, the entire shrub can be processed and we make use of the leaves to, for example, recover a greater quantity of bagasse and resin and aid percolation by diluting the ground shrub bed in the solvent extraction processes. The rubber recovered according to the present invention is improved as it is lighter in color than that recovered by the well known Saltillo process.

10

# 0 039 910

## Claims

1. A process of recovering usable products from guayule and guayule-like fibrous shrubs comprising the steps of:
(a) grinding the guayule shrub;
(b) extracting resins from the ground shrub; and
(c) extracting rubber from the ground shrub with hydrocarbon solvent,
in which steps (b) and (c) are performed either sequentially or in reverse order; characterized by extracting the resins from the ground shrub with concentrated resin miscella containing at least 4% resin as organic solvent.

2. The process of claim 1 wherein the concentrated resin miscella is acetone concentrated resin miscella containing at least 4% resin.

3. The process of claim 1 characterized by extracting the step (c) the rubber by percolation of the hydrocarbon solvent through a bed of the ground shrub, the percolation being performed with countergravity flow of the hydrocarbon solvent.

4. The process of claim 3 wherein the hydrocarbon solvent is hexane.

5. The process of claim 3 further comprising the step of diluting the percolation bed with bagasse prior to percolation.

6. The process of claim 1 characterized by totally immersing in step (b) said shrub in concentrated resin miscella containing at least 4% resin, said resin extraction being effected prior to or subsequent to extraction of water solubles with total immersion of the shrub in water, and extracting rubber in step (c) from the shrub of (b) by totally immersing said shrub in hydrocarbon solvent.

7. The process of claim 6 wherein said water is hot and said hydrocarbon solvent is hexane.

8. The process of claim 6 wherein said steps (b) and (c) are in reverse order.

## Patentansprüche

1. Verfahren zur Gewinnung von verwertbaren Produkten aus Guayale und guayuleähnlichen faserhaltigen Sträuchern, umfassend die Stufen
(a) Vermahlen des Guayulestrauchs;
(b) Extraktion von Harzen aus dem gemahlenen Strauch; und
(c) Extraktion von Kautschuk aus dem gemahlenen Strauch mit einem Kohlenwasserstofflösungsmittel,
wobei die Stufen (b) und (c) entweder nacheinander oder in umgekehrter Reihenfolge durchgeführt werde, dadurch gekennzeichnet, daß man die Harze aus dem gemahlenen Strauch mit konzentriertem Harz Miscella extrahiert, welches mindestens 4% Harz als organisches Lösungsmittel enthält.

2. Verfahren nach Anspruch 1, dadurch gekennzeichnet, daß das konzentrierte Harz Miscella acetonkonzentriertes Harz Miscella ist, welches mindestens 4% Harz enthält.

3. Verfahren nach Anspruch 1, dadurch gekennzeichnet, daß man in Stufe (c) den Kautschuk durch Perkolieren des Kohlenwasserstofflösungsmittels durch ein Bett des gemahlenen Strauchs extrahiert, wobei man die Perkolierung durch Gegenschwerkraftsfluß des Kohlenwasserstofflösungsmittels durchführt.

4. Verfahren nach Anspruch 3, dadurch gekennzeichnet, daß das Kohlenwasserstofflösungsmittel Hexan ist.

5. Verfahren nach Anspruch 3, dadurch gekennzeichnet durch die weitere Stufe der Verdünnung des Perkolierungsbetts mit Bagasse vor der Perkolierung.

6. Verfahren nach Anspruch 1 dadurch gekennzeichnet, daß man in Stufe (b) den genannten Strauch vollständig in konzentiertes Harz Miscella, welches mindestens 4% Harz enthält, eintaucht, wobei die genannte Harzextraktion vor oder nach der Extraktion von wasserlöslichen Stoffen mit totalem Eintauchen des Strauches in Waser durchgeführt wird und wobei man den Kautschuk in der Stufe (c) aus dem Strauch von (b) durch totales Eintauchen des genannten Strauches in Kohlenwasserstofflösungsmittel extrahiert.

7. Verfahren nach Anspruch 6, dadurch gekennzeichnet, daß das genannte Wasser heiß und daß das genannte Kohlenwasserstofflösungsmittel Hexan ist.

8. Verfahren nach Anspruch 6, dadurch gekennzeichnet, daß die genannten Stufen (b) und (c) in umgekehrter Reihenfolge durchgeführt werden.

## Revendications

1. Procédé pour recueillir des produits utilisables du guayule et d'arbustes fibreux analogues au guayule, qui comprend les étapes consistant:
(a) à broyer l'arbuste appelé guayule;
(b) à extraire des résines de l'arbuste broyé; et
(c) à extraire du caoutchouc de l'arbuste broyé avec un solvant hydrocarboné,
dans lequel les étapes (b) et (c) sont mises en oeuvre dans cet ordre ou dans l'ordre inverse; caractérisé en

11

ce qu'il consiste à extraire les résines de l'arbuste broyé avec, comme solvant organique, un miscella de résine concentrée contenant au moins 4% de résine.

2. Procédé suivant la revendication 1, dans lequel le miscella de résine concentrée est un miscella de résine concentrée dans l'acétone, contenant au moins 4% de résine.

3. Procédé suivant la revendication 1, caractérisé en ce qu'il consiste à extraire dans l'étape (c) le caoutchouc par percolation du solvant hydrocarboné à travers un lit de l'arbuste broyé, la percolation étant effectuée avec un écoulement du solvant hydrocarboné en sens inverse de la gravité.

4. Procédé suivant la revendication 3, dans lequel le solvant hydrocarboné est l'hexane.

5. Procédé suivant la revendication 3, comprenant en outre l'étape consistant à diluer le lit de percolation avec de la bagasse avant percolation.

6. Procédé suivant la revendication 1, caractérisé en ce qu'il consiste à immerger totalement dans l'étape (b) ledit arbuste dans un miscella de résine concentrée contenant au moins 4% de résine, ladite extraction des résines étant effectuée avant ou après l'extraction des substances hydrosolubles par immersion totale de l'arbuste dans l'eau, et à extraire du caoutchouc dans l'étape (c) de l'arbuste de l'étape (b) en immergeant totalement ledit arbuste dans un solvant hydrocarboné.

7. Procédé suivant la revendication 8, dans lequel l'eau est chaude et le solvant hydrocarboné est l'hexane.

8. Procédé suivant la revendication 8, dans lequel les étapes (b) et (c) sont mises en oeuvre dans l'ordre inverse.